# DEMANDE DE BREVET EUROPEEN

(11) **EP 3 072 386 A1**
(43) Date de publication de la demande: **28.09.2016**
(21) Numéro de dépôt: 16161063.9
(22) Date de dépôt: 18.03.2016
(51) Int. Cl.: A01G 3/025, A01G 3/047

(54) **OUTIL DE COUPE A DEUX MAINS COMPRENANT UNE POIGNEE TOURNANTE**

(30) Priorité: 23.03.2015 FR 1552361
(71) Demandeur: Deville SA, 49150 Baugé en Anjou (FR)
(72) Inventeur: DEVILLE, Antoine, 49150 Baugé en Anjou (FR); ANGELOT, David, 49150 Baugé en Anjou (FR)
(74) Mandataire: Novagraaf Technologies

(57) **Abrégé**

L'outil de coupe (1) manipulable à deux mains seulement comprenant : - une tête d'outil comprenant une mâchoire de coupe formée par des premier (7) et deuxième (6) éléments de coupe articulés l'un par rapport à l'autre; - des premier et deuxième manches de manipulation (3,5) de la tête d'outil comportant, à une première extrémité, une poignée et, à une deuxième extrémité opposée à la première, les premier et deuxième éléments de coupe (7,6) respectivement, pour au moins l'un parmi les premier et deuxième manches de manipulation (3,5), la poignée (2,4) est montée libre à rotation en partie selon un axe longitudinal de la poignée (2,4) par rapport à l'élément de coupe (6,7) associé au manche de manipulation (3,5) considéré.

## Description

L'invention concerne le domaine des outils de coupe en particulier ceux manipulables à deux mains, telle que des élagueurs ou des ébrancheurs, ou encore des cisailles.

De manière classique, les outils de coupe à deux mains comportent une tête d'outil comprenant une mâchoire de coupe permettant de placer l'objet à couper, par exemple une branche, entre deux éléments de coupe articulés l'un par rapport à l'autre. Ces deux éléments de coupe articulés sont, chacun, montés sur une extrémité d'un manche de manipulation, ce dernier comprenant à une autre extrémité une poignée.

Toutefois, lors de longues utilisation des ses outils de coupe manipulables à deux mains, une fatigue apparait rapidement au niveau des membres supérieurs, des épaules et du cou d'un utilisateur, du fait des mouvements induits répétitifs qui sont imposés lors de la taille, entraînant des troubles musculo squelettiques chez les tailleurs professionnels.

Un but de l'invention est de fournir un outil de coupe manipulable à deux mains permettant de réduire au maximum cette fatigue, et ces troubles, et de rendre plus aisé dans le temps l'utilisation d'un tel outil.

A cette fin, il est prévu, selon l'invention, un outil de coupe manipulable à deux mains seulement comprenant une tête d'outil comprenant une mâchoire de coupe formée par des premier et deuxième éléments de coupe articulés l'un par rapport à l'autre, des premier et deuxième manches de manipulation de la tête d'outil comportant, à une première extrémité, une poignée et, à une deuxième extrémité opposée à la première, les premier et deuxième éléments de coupe respectivement, où, pour au moins l'un parmi les premier et deuxième manches de manipulation, la poignée est montée libre à rotation en partie selon un axe longitudinal de la poignée par rapport à l'élément de coupe associé au manche de manipulation considéré.

Ainsi, un tel montage de la poignée par rapport à l'élément de coupe associé permet d'éviter tout mouvement induit répétitif inutile au niveau du cou et/ou des épaules et/ou des membres supérieurs d'un utilisateur, améliorant ainsi le confort d'utilisation dans le temps de l'outil de coupe tout en diminuant les troubles musculo squelettiques.

Avantageusement, mais facultativement, l'outil de coupe selon l'invention présente au moins l'une des caractéristiques techniques additionnelles suivantes :
- pour l'autre parmi les premier et deuxième manches de manipulation, la poignée est montée libre à rotation en partie selon un axe longitudinal de la poignée par rapport à l'élément de coupe associé au manche de manipulation considéré ;
- la poignée est montée libre à rotation en partie, via des moyens de montage, sur le manche de manipulation considéré ;
- le manche de manipulation considéré est montée libre à rotation en partie, via des moyens de montage, sur l'élément de coupe associé ;
- le manche de manipulation considéré est en deux parties au moins, les parties étant montées l'une avec l'autre libres en partie à rotation, via des moyens de montage ;
- les moyens de montage comprennent un axe de montage formant axe de rotation, monté fixe sur le manche de manipulation considéré ou sur l'élément de coupe associé et s'étendant en saillie selon l'axe de longitudinal de la poignée ;
- les moyens de montage comprennent un premier insert comprenant un orifice longitudinal agencé de sorte à recevoir de manière solidaire l'axe de montage et à être monté en force dans le manche de manipulation considéré ;
- les moyens de montage comprennent un deuxième insert comprenant un orifice longitudinal lisse agencée de sorte à recevoir, libre à rotation, une partie en saillie de l'axe de montage ;
- l'axe de montage est une vis enfilée à travers le deuxième insert puis vissé dans le premier insert ;
- les moyens de montages comprennent des moyens de limitation angulaire d'un mouvement de rotation de la poignée par rapport à l'élément de coupe associé ;
- l'outil de coupe est l'un parmi une cisaille, un élagueur, un ébrancheur.

D'autres caractéristiques et avantages de l'invention apparaîtront lors de la description ci-après d'un mode de réalisation préféré d'un outil de coupe selon l'invention, et d'une variante. Aux dessins annexés :
- la figure 1 est une vue en trois dimensions d'un outil de coupe manipulable à deux mains selon l'invention ;
- la figure 2 est une vue partielle de coté d'un manche de l'outil de la figure 1 ;
- la figure 3 est une vue partielle en coupe selon III-III du manche de la figure 2 ;
- les figures 4 et 5 sont des vues partielles en trois dimensions d'une variante de réalisation de moyens de montages pour un outil de coupe manipulable à deux mains selon l'invention ;
- La figure 6 est vue de face d'un outil de coupe manipulable à deux mains selon un autre mode de réalisation de l'invention ;
- La figure 7 est une vue en coupe de coté de l'outil de la figure 8 ;
- La figure 8 est une vue partielle en coupe d'une autre variante de réalisation de moyens de montage pour un outil de coupe manipulable à deux mains selon l'invention ; et,
- La figure 9 est une vue partielle en coupe d'une autre encore variante de réalisation de moyens de montage pour un outil de coupe manipulable à deux mains selon l'invention.

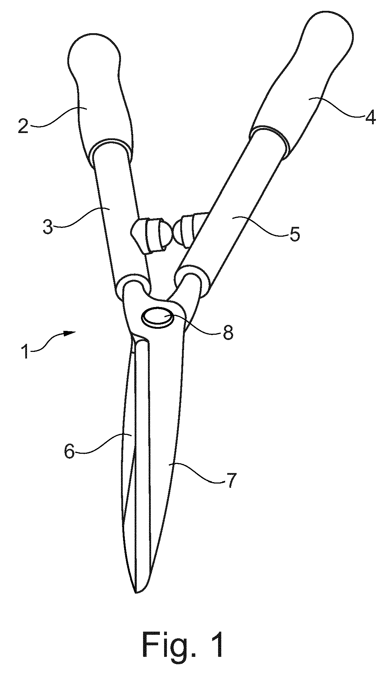

La figure 1 illustre un outil de coupe manipulable à deux mains 1 selon l'invention. Ici, l'outil de coupe manipulable à deux mains 1 selon l'invention est une paire de de cisailles utilisée pour la taille de haies par exemple.

D'une manière générale, l'outil de coupe manipulable à deux mains 1 selon l'invention comprend une tête d'outil comportant une mâchoire formée par des premier 7 et deuxième 6 éléments de coupe articulés l'un par rapport à l'autre selon un axe de rotation 8.

En particulier, ces deux éléments de coupe 6,7 sont des lames articulées entre elles, de manière à former la mâchoire coupante. Ces éléments de coupes 6,7 peuvent être écartés (la mâchoire est ouverte) ou rapprochés (la mâchoire est fermée) l'un de l'autre, une coupe d'un matériau enserré dans la mâchoire se faisant lors de leur rapprochement.

Afin d'ouvrir et de fermer la mâchoire par manipulation des deux éléments de coupe 6,7, l'outil de coupe manipulable à deux mains 1 selon l'invention comporte un premier ensemble comprenant un premier manche de manipulation 3 et une première poignée 2, et une deuxième ensemble comprenant un deuxième manche de manipulation 5 et une deuxième poignée 4. Les premier et deuxième ensembles sont montés respectivement sur les premier 7 et deuxième 6 éléments de coupe. En particulier, pour chacun des premier et deuxième ensembles, le manche de manipulation 3, resp. 5, comporte à une première extrémité la poignée 2, resp. 4, et à une deuxième extrémité opposée de la première extrémité l'élément de coupe 7, resp. 6, associé.

Dans un mode de réalisation de l'invention, chaque élément de coupe 7,6 est monté sur l'extrémité du manche de manipulation associé 3,5 d'une manière connu en soi : par exemple, le manche de manipulation 3,5 comportant un tube métallique (généralement de l'aluminium ou un de ses alliages) creux 51, un insert situé sur une extrémité de manipulation de l'élément de coupe 7,6 associé est emmanché dans le manche de manipulation 3,5 et retenu en place par des moyens connu en soit, comme des systèmes vis/écrou prisonnier. En variante de réalisation, le tube du manche de manipulation est réalisé en plastique ou en fibres de carbone. Il peux être plein ou partiellement creux.

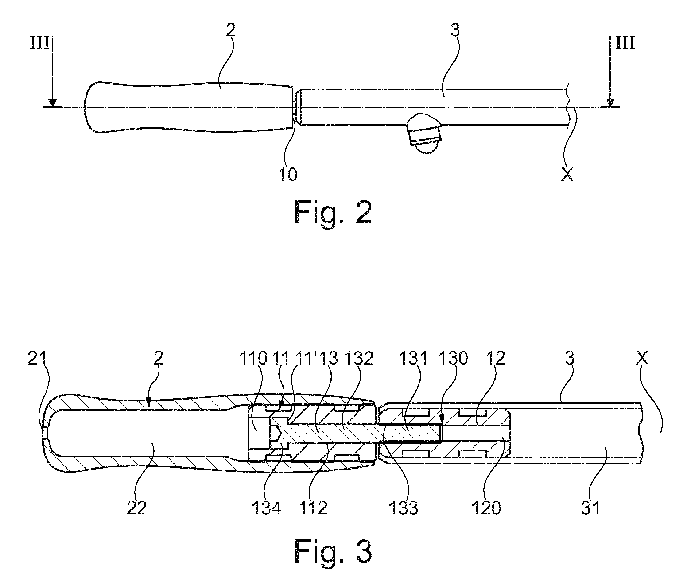

Illustré en figure 2 et 3, le montage de la poignée 2 sur l'extrémité du manche de manipulation 5 est réalisé avec des moyens de montage 10. En particulier, la poignée 2 est montée libre à rotation selon un axe longitudinal X de la poignée sur le manche de manipulation 3. Ainsi, la poignée 2 est montée libre à rotation selon l'axe longitudinal X par rapport à l'élément de coupe 7 associé au manche de manipulation 3. La poignée 2 est de forme cylindrique de révolution principalement, creuse, délimitant un espace intérieur 22 ouvert à une extrémité, qui, lors d'un montage, est en regard du manche de manipulation 3, et fermé sauf un orifice de passage 21 à l'autre extrémité opposée selon l'axe longitudinal X. D'autre part, le manche de manipulation 3 est réalisé à partir d'un tube creux, cylindrique de révolution, délimitant un deuxième espace intérieur 31 ouvert à chacune des extrémités afin de permettre un montage de l'élément de coupe 7 associé et de la poignée 2 respectivement.

Afin, de permettre le mouvement de rotation de la poignée 2 par rapport à l'élément de coupe 7 associé, les moyens de montage 10 comportent un axe de montage 13, des premier 11 et deuxième 12 inserts. Ici, l'axe de montage 13 est une vis comportant trois parties le long de son axe longitudinal : une première partie formant une tête de vis 134 comprenant une empreinte de manipulation destinée à recevoir un embout de tournevis complémentaire, puis une deuxième partie situé sous la tête de vis 134 comprenant un tronçon d'axe 132 présentant une paroi extérieure lisse, puis une troisième partie, dans le prolongement de la deuxième partie, comportant un autre tronçon d'axe 131 présentant un filetage 133 et se terminant par une extrémité libre 130.

Le premier insert 11 est globalement de forme cylindrique de révolution et présente un diamètre tel afin de permettre un emmanchement en force du premier insert 11 dans l'espace intérieur 22 de la poignée par l'extrémité ouverte dudit espace intérieur 22. Le premier insert 11 comporte, le long de son axe longitudinal, un orifice traversant comprenant un premier alésage 110 dimensionné pour recevoir la tête de vis 134 de l'axe de montage 13, lors d'un montage. Ce premier alésage 110 se termine par un épaulement 111 contre lequel, lors d'un montage, la tête de vis 134 de l'axe de montage 13 vient en appui. L'épaulement 111 entoure un deuxième alésage 112, coaxial et dans le prolongement du premier alésage 110. L'orifice traversant du premier insert 11 comporte le deuxième alésage ainsi que l'épaulement 111. Lors d'un montage, le deuxième alésage 112, qui est lisse, reçoit libre à rotation selon l'axe X le tronçon d'axe 132 qu'il entoure.

Le deuxième insert 12 est globalement de forme cylindrique de révolution et présente un diamètre tel afin de permettre un emmanchement en force du deuxième insert 12 dans l'espace intérieur 31 du manche de manipulation 3 par l'extrémité ouverte dudit espace intérieur 31. Le deuxième insert 12 comporte, le long de son axe longitudinal, un orifice traversant 120. Cet orifice traversant 120 comporte sur au moins une partie un filetage qui est complémentaire du filetage 133 de l'axe de montage 13 afin de recevoir, par vissage, lors d'un montage l'autre tronçon d'axe 131 fileté de l'axe de montage 13. Ainsi, après montage, l'axe de montage 13 est monté fixe sur le manche de manipulation 3. En variante de réalisation, l'orifice traversant 120 est lisse, le filetage 133 de l'axe de montage 13 étant alors auto-taraudant afin de créer, lors d'un montage, un filetage complémentaire dans l'orifice traversant 120 du deuxième insert 12.

Le montage s'effectue comme suit : l'axe de montage est enfilé dans l'orifice traversant du premier insert 11, la tête de vis étant reçu dans le premier alésage 110, en appui contre l'épaulement 111, le tronçon d'axe 132 enfilé dans le deuxième alésage 112, l'autre tronçon d'axe 131 étant saillant selon l'axe longitudinale X. Le premier insert 11 est ensuite emmanché en force dans l'espace intérieure 22 de la poignée 2. Par ailleurs, Le deuxième insert 12 est emmanché en force dans l'espace intérieur 31 du manche de manipulation 3. Puis l'autre tronçon d'axe 131 est vissé dans l'orifice traversant 120 du deuxième insert 12 jusqu'à ce que le filetage 133 soit complètement inséré dans l'orifice traversant 120 du deuxième insert 12. Dès lors, les premier 11 et deuxième 12 inserts sont coaxiaux dans le prolongement l'un de l'autre selon l'axe longitudinal X avec un jeu les séparant de sorte à ne pas perturbé les mouvements de rotation du premier insert 11 autour de l'axe de montage 13. Lors du vissage de l'axe de montage 13 dans le deuxième insert 12, un tournevis, ou autre, est enfilé par l'orifice de passage 21 de sorte qu'une empreinte de l'outil utilisé vienne en prise avec l'empreinte de la tête de vis 134 afin de bloquer en rotation l'axe de montage 13, durant le montage.

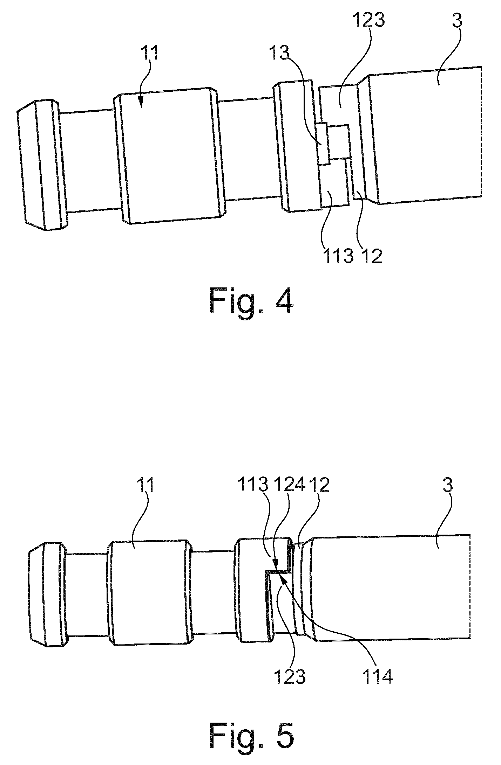

En référence aux figures 4 et 5, nous allons décrire une variante de réalisation des moyens de montage 10 précédemment décrits. Dans cette variante de réalisation, les moyens de montage 10 comprennent des moyens de limitation du mouvement de rotation du premier insert 12 par rapport au deuxième insert 12. Ainsi, au final, la poignée 2 est, selon cette variante, montée libre à rotation en partie selon l'axe longitudinal X par rapport à l'élément de coupe 7 associé. Les moyens de limitation du mouvement de rotation comprennent, ici à cette fin, deux doigts 113 et 123 agencés de sorte à venir en contact l'un avec l'autre lors d'un mouvement de rotation du premier insert 12 par rapport au deuxième insert 12. Le premier doigt 113 s'étend en saillie parallèlement à l'axe longitudinal X depuis une face d'extrémité du premier insert 11 en regard du deuxième insert 12. De manière similaire, mais tête-bêche, le deuxième doigt 123 s'étend en saillie parallèlement à l'axe longitudinal X depuis une face d'extrémité du deuxième insert 12 en regard du premier insert 11. Cela est illustré en figure 4. Ainsi les doigts 113 et 123 sont dans le cheminement de l'un de l'autre. La figure 5 illustre une position où les doigts 113 et 123 sont en contact l'un avec l'autre par appui de leurs faces angulaires respective 114 et 124, limitant le mouvement de rotation ayant amené les deux faces angulaires 114 et 124 en contact l'une contre l'autre. Une situation similaire survient lors d'un mouvement de rotation opposé.

Nous venons de décrire un mode de réalisation d'un outil de coupe manipulable à deux mains 1 selon l'invention dans lequel la poigné 2 est montée libre à rotation complètement ou partiellement par rapport à l'élément de coupe 7 associé, via des moyens de montage 10 prévus à cet effet entre la poignée 2 et le manche de manipulation 3 considéré.

En variante de réalisation, les moyens de montage, mutatis mutandis, sont situés entre le manche de manipulation et l'élément de coupe associé, la poignée pouvant être montée fixe de manière connue en soi sur le manche de manipulation.

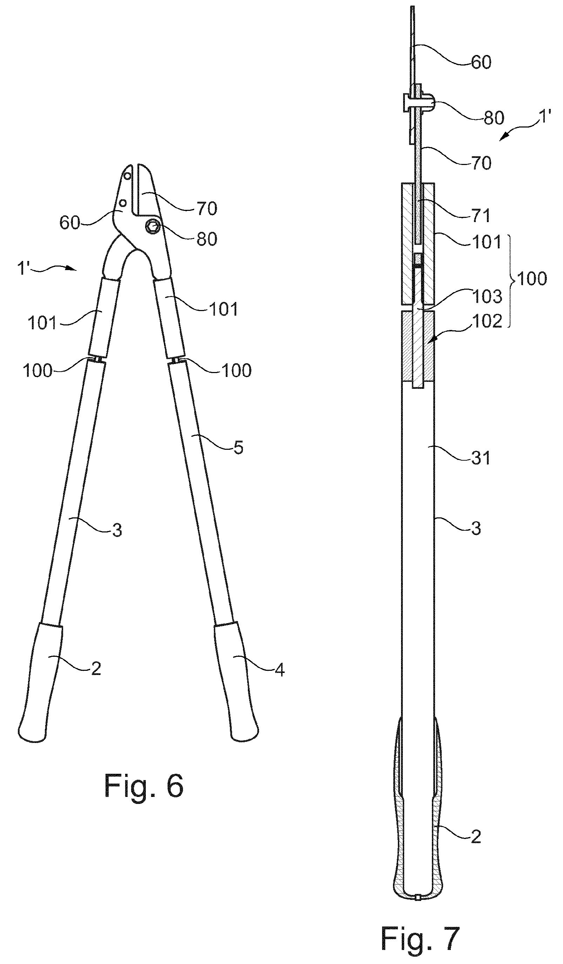

Un exemple d'une telle variante de réalisation est illustré aux figures 6 et 7. L'outil de coupe manipulable à deux mains l' selon l'invention est, ici, un élagueur ou un ébrancheur. Comme précédemment, il comporte une tête d'outil comprenant une mâchoire formée par des premier 70 et deuxième 60 éléments de coupe articulés l'un par rapport à l'autre selon un axe de rotation 80. Afin de manipuler ces éléments de coupe 60,70, l'outil de coupe manipulable à deux mains l' selon l'invention comporte un premier ensemble comprenant un premier manche de manipulation 3 et une première poignée 2, et une deuxième ensemble comprenant un deuxième manche de manipulation 5 et une deuxième poignée 4. Les premier et deuxième ensembles sont montés respectivement sur les premier 70 et deuxième 60 éléments de coupe. En particulier, pour chacun des premier et deuxième ensembles, le manche de manipulation 3, resp. 5, comporte à une première extrémité la poignée 2, resp. 4, et à une deuxième extrémité opposée de la première extrémité l'élément de coupe 70, resp. 60, associé.

Pour chacun des premier et deuxième ensembles, la poignée 2,4 est montée solidaire avec ou fixe sur l'extrémité du manche de manipulation 3,5. Les moyens de montage 100 sont situés entre le manche de manipulation 3,5 et l'élément de coupe 60,70 associé. A cette fin, les moyens de montage comprennent une pièce de liaison 101 qui est emmanchée d'un coté sur une interface 71 de l'élément de coupe associé 70, et coopère de l'autre coté avec un axe de rotation 103 desdits moyens de montage 100. L'axe de rotation 103 est monté soit libre à rotation, soit solidaire de la pièce de liaison 101. D'autre part, les moyens de montage 100 comportent un insert 102 qui emmanché par une extrémité, dans le manche de manipulation 3 de manière similaire à l'insert 12 précédemment décrit. L'insert 102 comporte un orifice longitudinal traversant qui reçoit, lors d'un montage une partie de l'axe de rotation 103. De nouveau, l'axe de rotation 103 est monté soit libre à rotation, soit solidaire de l'insert 102. Dans touts les cas, le montage de l'axe de rotation 103 avec la pièce de liaison 101 et l'insert 102 est tel que l'insert 102 est montée au moins en partie libre à rotation par rapport à la pièce de liaison 101.

Ainsi, au final, la poignée 2 est montée libre à rotation complètement ou partiellement par rapport à l'élément de coupe 70 associé, via les moyens de montage 100.

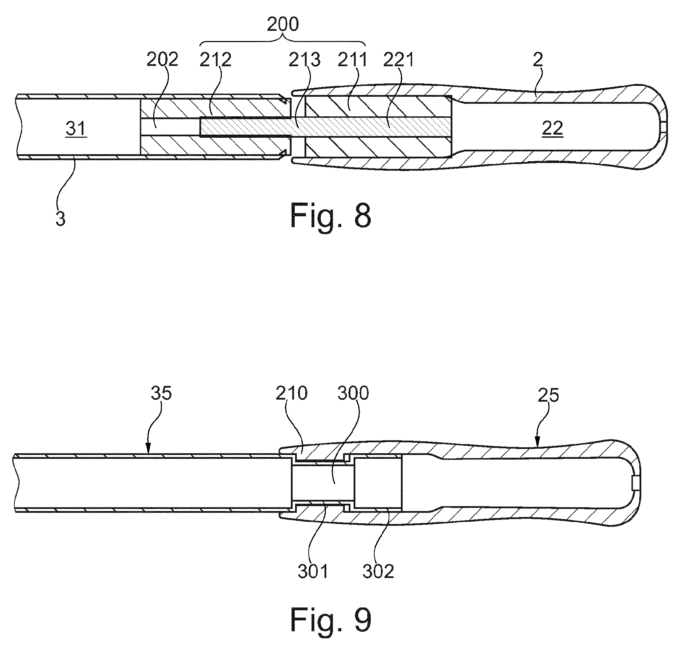

En se référant maintenant à la figure 8, nous allons décrire une variante 200 de réalisation de moyens de montage 10 précédemment décrits à la figure3. Les moyens de montage 200 comprennent un premier insert 211 comportant un orifice longitudinal 221 traversant. Il est monté dans la poignée 2 de manière similaire au montage de l'insert 11 dans la poignée 2. Une portion d'un axe de rotation 213 est positionnée dans l'orifice longitudinal 221. Les moyens de montage 200 comprennent un deuxième insert 212 comportant, lui aussi un orifice longitudinal traversant 202. Il est monté dans le manche de manipulation 3 de manière similaire au montage de l'insert 12 dans le manche de manipulation 3. Une autre portion de l'axe de rotation 213 est positionnée dans l'orifice longitudinal 202. L'axe de rotation 213 est monté soit libre à rotation, soit solidaire de l'insert 212. De même, l'axe de rotation 213 est monté soit libre à rotation, soit solidaire de l'insert 211. Dans touts les cas, le montage de l'axe de rotation 213 avec l'insert 211 et l'insert 212 est tel que l'insert 212 est montée au moins en partie libre à rotation par rapport à l'insert 211.

Ainsi, au final, la poignée 2 est montée libre à rotation complètement ou partiellement par rapport à l'élément de coupe 7,70 associé, via les moyens de montage 200.

En se référant à la figure 9, nous allons décrire une autre variante 300 de réalisation des moyens de montage pour un outil de coupe manipulable à deux mains 1, 1' selon l'invention. Dans cette variante de réalisation, les moyens de montage 300 sont réalisés directement sur le manche de manipulation 35 et la poignée 25. Au niveau d'une extrémité du manche de manipulation 35, les moyens de montage 300 comportent, longitudinalement depuis ladite extrémité, une première portion 302 formant la dite extrémité présentant des dimensions similaires au reste du manche de manipulation 35 puis une deuxième portion 301 formée d'une gorge circonférentielle de dimensions inférieures au reste du manche de manipulation. AU niveau d'une extrémité libre de la poignée 25, les moyens de montage 300 comprennent une languette 210 annuaire s'étendant en saille de manière centripète dans la partie creuse de la poignée 25. Au montage, la languette 210 est reçue avec jeu dans la gorge 301 de sorte à maintenir la poignée 35 fixe en translation selon l'axe longitudinal du manche de manipulation 35 et a permettre la transmission des efforts d'ouverture et de fermeture de la mâchoire de la tête d'outil, tout en permettant un mouvement de rotation, au moins en partie libre, autour dudit axe longitudinal de la poignée 25 par rapport au manche de manipulation 35.

Ainsi, au final, la poignée 25 est montée libre à rotation complètement ou partiellement par rapport à l'élément de coupe associé, via les moyens de montage 300.

Dans une autre variante encore, le manche de manipulation est en deux parties, les moyens de montage reliant les deux parties du manche de manipulation. Dans ce cas, la poignée et l'élément de coupe associé sont montés fixes de manière connu en soi sur les deux parties du manche de manipulation.

Le deuxième ensemble comprenant la deuxième poignée 4 et le deuxième manche de manipulation 5 associé au deuxième élément de coupe 6,60 peut être équipé de manière similaire que le premier ensemble comprenant le premier manche de manipulation 3 et la première poignée 2 associé à l'élément de coupe 7,70 avec des moyens de montage 10,100,200,300 ou similaires.

Bien que la description qui précède soit basée sur une paire de cisailles ou un élagueur, l'invention est adaptable de manière très simple à tout outil de coupe manipulable à deux mains tel qu'un ébrancheur ou autre.

Bien entendu, il est possible d'apporter à l'invention de nombreuses modifications sans pour autant sortir du cadre de celle-ci.

## Revendications

1. Outil de coupe manipulable à deux mains seulement comprenant :
- Une tête d'outil comprenant une mâchoire de coupe formée par des premier et deuxième éléments de coupe articulés l'un par rapport à l'autre
- Des premier et deuxième manches de manipulation de la tête d'outil comportant, à une première extrémité, une poignée et, à une deuxième extrémité opposée à la première, les premier et deuxième éléments de coupe respectivement,
**caractérisé en ce que**, pour au moins l'un parmi les premier et deuxième manches de manipulation, la poignée est montée libre à rotation en partie selon un axe longitudinal de la poignée par rapport à l'élément de coupe associé au manche de manipulation considéré.

2. Outil de coupe selon la revendication 1, **caractérisé en ce que**, pour l'autre parmi les premier et deuxième manches de manipulation, la poignée est montée libre à rotation en partie selon un axe longitudinal de la poignée par rapport à l'élément de coupe associé au manche de manipulation considéré.

3. Outil de coupe selon la revendication 1 ou 2, **caractérisé en ce que** la poignée est montée libre à rotation en partie, via des moyens de montage, sur le manche de manipulation considéré.

4. Outil de coupe selon l'une des revendications 1 à 3, **caractérisé en ce que** le manche de manipulation considéré est montée libre à rotation en partie, via des moyens de montage, sur l'élément de coupe associé.

5. Outil de coupe selon l'une des revendications 1 à 4, **caractérisé en ce que** le manche de manipulation considéré est en deux parties au moins, les parties étant montées l'une avec l'autre libres en partie à rotation, via des moyens de montage.

6. Outil de coupe selon l'une des revendications 3 à 5, **caractérisé en ce que** les moyens de montage comprennent un axe de montage formant axe de rotation, monté fixe sur le manche de manipulation considéré ou sur l'élément de coupe associé et s étendant en saillie selon l'axe de longitudinal de la poignée.

7. Outil de coupe selon la revendication 6, **caractérisé en ce que** les moyens de montage comprennent un premier insert comprenant un orifice longitudinal agencé de sorte à recevoir de manière solidaire l'axe de montage et à être monté en force dans le manche de manipulation considéré.

8. Outil de coupe selon l'une des revendications 6 à 7, **caractérisé en ce que** les moyens de montage comprennent un deuxième insert comprenant un orifice longitudinal lisse agencée de sorte à recevoir, libre à rotation, une partie en saillie de l'axe de montage.

9. Outil de coupe selon la revendication 8, **caractérisé en ce que** l'axe de montage est une vis enfilée à travers le deuxième insert puis vissé dans le premier insert.

10. Outil de coupe selon l'une des revendications 3 à 9, **caractérisé en ce que** les moyens de montages comprennent des moyens de limitation angulaire d'un mouvement de rotation de la poignée par rapport à l'élément de coupe associé.

11. Outil de coupe selon l'une des revendications 1 à 10, **caractérisé en ce qu'**il est l'un parmi une cisaille, un élagueur, un ébrancheur.
